(19) **Europäisches Patentamt / European Patent Office / Office européen des brevets**

(11) **EP 1 868 194 A2**

(12) **EUROPEAN PATENT APPLICATION**

(43) Date of publication:
**19.12.2007 Bulletin 2007/51**

(51) Int Cl.:
***G11B 20/00*** *(2006.01)*

(21) Application number: **07109199.5**

(22) Date of filing: **30.05.2007**

<table>
<tr><td>(84) Designated Contracting States:<br><b>AT BE BG CH CY CZ DE DK EE ES FI FR GB GR HU IE IS IT LI LT LU LV MC MT NL PL PT RO SE SI SK TR</b><br>Designated Extension States:<br><b>AL BA HR MK YU</b></td><td>(72) Inventors:<br>• <b>Hiroyuki, Kamio</b><br>  <b>Toshiba Corporation,</b><br>  <b>Minato-ku, Tokyo 105-8001 (JP)</b><br>• <b>Takayuki, Tachikawa</b><br>  <b>Toshiba Corporation,</b><br>  <b>Minato-ku, Tokyo 105-8001 (JP)</b></td></tr>
<tr><td>(30) Priority: <b>13.06.2006 JP 2006163470</b></td><td rowspan="2">(74) Representative: <b>Henkel, Feiler & Hänzel</b><br><b>Patentanwälte</b><br><b>Maximiliansplatz 21</b><br><b>80333 München (DE)</b></td></tr>
<tr><td>(71) Applicant: <b>Kabushiki Kaisha Toshiba</b><br><b>Minato-ku,</b><br><b>Tokyo 105-8001 (JP)</b></td></tr>
</table>

(54) **Information access control method and device, and write-once medium**

(57)    An access management system such as an AACS is used to protect highly confidential information recorded in a write-once medium. To first prepare a title key file for encryption by the AACS, title keys (or Kts) are prepared as many as the number of rules of a usage rule file (ST300 to ST306). The plurality of title keys prepared in this manner are written in the title key file (ST308). The title keys written in this title key file are appropriately used to encrypt contents, and the encrypted contents are then recorded in the write-once medium.

F I G. 17

EP 1 868 194 A2

**Description**

This invention relates to information access control using an encryption key. More particularly, it relates to a file control method of a key for use in protection of highly confidential data to be recorded in a write-once medium (or an update method of a key in a write-once medium).

In recent years, various digital devices have been developed which access contents recorded in disc media and the like. Data recorded in a disc accessed by each of such digital devices is subjected to encryption processing to prevent an unjust access or illegal copy. When the encrypted data is recorded in a digital versatile disc (DVD), an encryption system of a content scramble system (CSS) is mainly employed.

On the other hand, as a further advanced encryption system, an advanced access content system (AACS) has been proposed (Jpn. Pat. Appln. KOKAI Publication No. 2005-39480). When this AACS system is employed, for example, a set maker obtains a specific key set from a key matrix which a licensee has, and encrypts different combinations of keys to incorporate them in individual devices.

In the AACS, each of a plurality of keys is encrypted with a device key given to each device that justly records and reproduces the contents and a randomly generated random number, and the encrypted keys are registered together with the random number in a key file and recorded in the medium. In a case where the contents are reproduced, the encrypted keys registered in the key file are decrypted with the random number and the device key of the device which is to reproduce the contents. Then, the contents are decrypted with the decrypted key to reproduce the contents.

In the AACS, it is demanded that information on the encryption be overwritten at the same place of the recording medium. Therefore, for the utilization of the AACS in a write-once medium which cannot be overwritten, a contrivance is needed.

An access control system such as an AACS is used to protect highly confidential data recorded in a write-once medium in which any file cannot be rewritten.

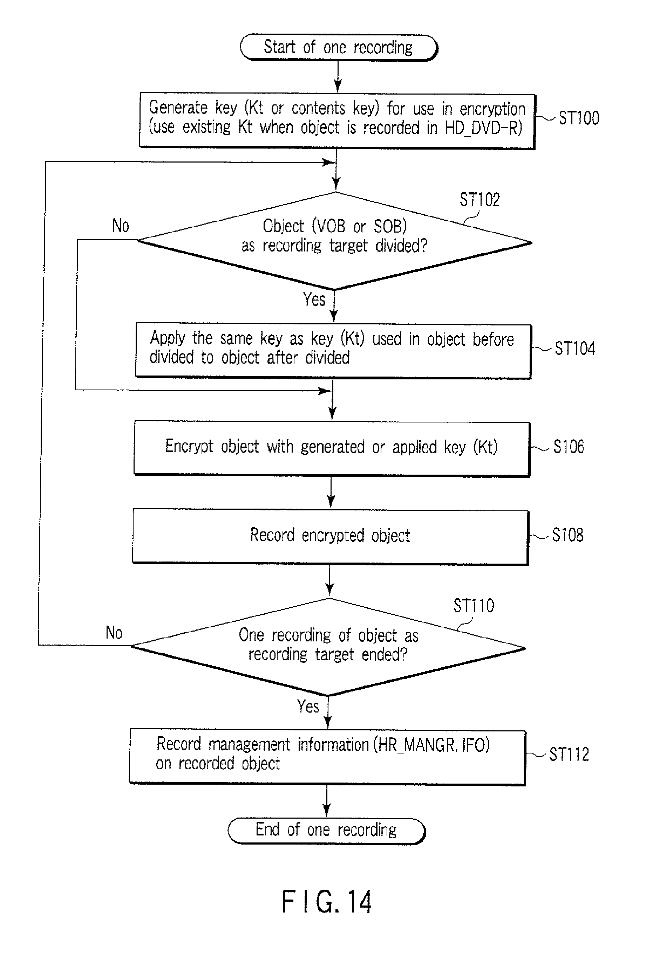

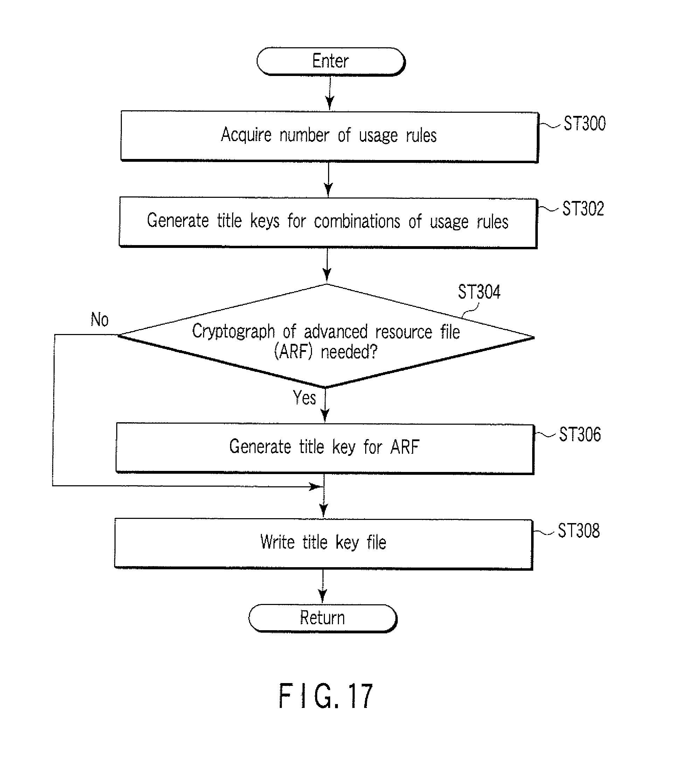

According to information access control regarding one embodiment of this invention, in a case where a file (a title key file) of keys (title keys or Kts) which encrypt contents (a title) to be protected from an unjust access by a predetermined encryption system (AACS) is first prepared (when entering the processing of FIG. 17 from start of FIG. 14), the keys (the title keys or the Kts) are prepared as many as the number of rules in a predetermined usage rule file (the number of the keys corresponds to the number of combinations of the usage rules and appropriately the number of the title keys for ARF. The number of the keys can be set to 1998 at maximum in the AACS, but the number is usually the smallest number determined by the number of the combinations of the usage rules or the like) (ST300 to ST306 of FIG. 17). The keys (the title keys or the Kts) prepared in this manner are written in the file (the title key file) of the keys (ST308), and the contents are encrypted (ST106) by use of the keys written in the file (the title key file) of the keys (ST100 of FIG. 14). Then, the encrypted contents (the title) are recorded in a write-once medium (HD_DVD-R or the like) (ST108 to ST112).

Since the needed number of the keys (the title keys or the Kts) is beforehand prepared, the keys can substantially be updated even in the write-once medium in which any file cannot be rewritten.

The invention can be more fully understood from the following detailed description when taken in conjunction with the accompanying drawings, in which:

FIG. 1 is an exemplary view of a constitution of data (a title key file) in a medium (an information recording medium) according to one embodiment of this invention;

FIG. 2 is an exemplary view of a processing example in which encrypted contents recorded in the medium are decrypted;

FIG. 3 is an exemplary view of a processing example in which contents are encrypted and recorded in a DVD;

FIG. 4 is an exemplary view showing a structure of a title key file and a structure of a title key file as a backup file of the title key file;

FIG. 5 is an exemplary diagram showing data on a medium used for a recording and reproducing process in which an encryption system (AACS) to be employed in one embodiment of this invention is used;

FIG. 6 is an exemplary diagram showing data on a medium used for the recording and reproducing process of the AACS;

FIG. 7 is an exemplary diagram showing data on a medium used for the recording and reproducing process of the AACS;

FIG. 8 is an exemplary diagram showing a structure example of an encrypted title key file (E-TKF);

FIG. 9 is an exemplary flow chart explaining an update procedure of a title key file of a rewritable medium;

FIG. 10 is an exemplary flow chart explaining a writing procedure of a title key file of a write-once medium;

FIG. 11 is an exemplary view of a data structure example according to one embodiment of this invention;

FIG. 12 is an exemplary view of a file structure example according to one embodiment of this invention;

FIG. 13 is an exemplary block diagram explaining a constitution example of a recording and reproducing device (an HD DVD recorder) according to one embodiment of this invention;

FIG. 14 is an exemplary flow chart explaining a recording method according to one embodiment of this invention;

FIG. 15 is an exemplary flow chart explaining a reproducing method according to one embodiment of this invention;

FIG. 16A is an exemplary diagram showing a part of a structure example of a title usage rule file;

FIG. 16B is an exemplary diagram showing another part of the structure example of the title usage rule file; and

FIG. 17 is an exemplary flow chart explaining one example of a processing procedure in which a title key file is first written in the write-once medium.

Various embodiments of this invention will hereinafter be described with reference to the drawings.

When information is recorded in an information recording medium such as an optical disc, it is demanded in some case that information be encrypted and recorded. In this case, for example, contents protected by copyright are encrypted with an encryption key to form encrypted contents. Furthermore, to confidentially keep the encryption key used for the encryption, the key is encrypted with another encryption key to form the encrypted key. Moreover, the encrypted key and the encrypted contents are recorded together in a recording medium to prevent illegal copying.

At present, in digital versatile discs (DVDs) whose market has rapidly enlarged, the following countermeasure is taken to protect the copyright thereof. That is, a content scramble system (CSS) licensed by DVD copy control association (DVD CCA) is utilized for DVD videos, and a system of content protection for prerecorded media (CPPM) is utilized for DVD audios. In a copyright protection system of the contents which are recorded in the recording medium, a system of content protection for recordable media (CPRM) is utilized. The CPPM system and the CPRM system are licensed by a specific group (e.g., a group referred to as 4C Entity, LLC).

On the other hand, development of a next-generation DVD or the like with a large capacity has been advanced so that a highly definite image, a high-quality multi-channel voice signal and the like can further be recorded and reproduced. In a copyright protection system for such a case where a high-quality copyright work is recorded in such a next-generation recording medium, there is a demand for introduction of a system in which a security capability is improved more than before. As a specific example of the system, there is an advanced access content system (AACS). A control method of a contents key of the AACS which is a content protection technology employed in a high density digital versatile disc video recording (HD_DVD-VR) format will hereinafter be described.

In a conventional CPRM system, an encryption key has been generated using a media key block (MKB) and a media ID which are present in a disc to encrypt the content. On the other hand, in the AACS, the contents recorded in the disc are encrypted with the encryption keys for the respective contents without using one common encryption key.

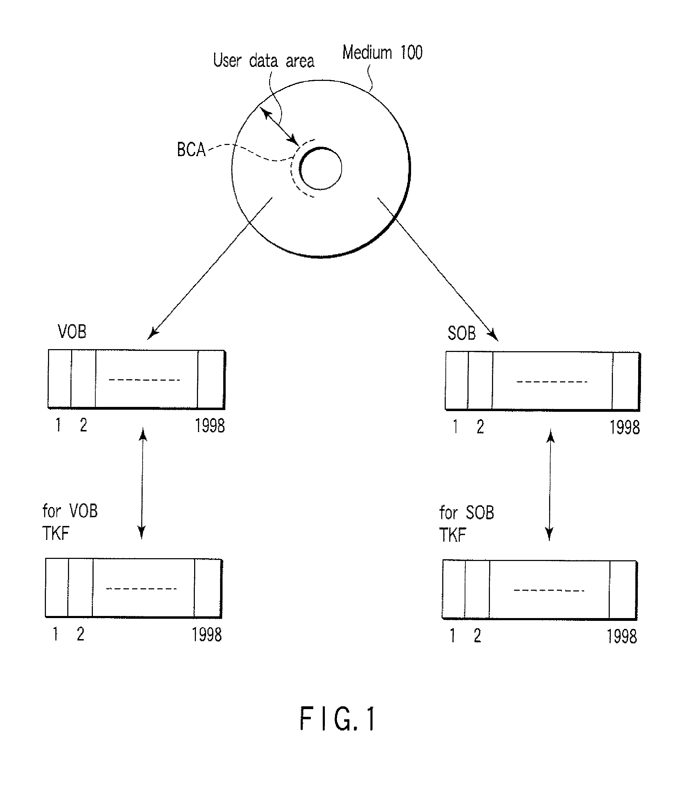

FIG. 1 is a diagram showing a constitution example of data recorded in a medium 100. In this example, in the same medium, according to standards, it is possible to store 1998 video objects (VOB) and 1998 stream objects (SOB) at maximum. The video objects are contents of a type such as MPEG2-PS, and the stream objects are contents of a type such as MPEG2-TS. In the conventional system, one encryption key is used for all of these objects. However, in the AACS, the contents are encrypted in accordance with different encryption keys for the contents, respectively. Moreover, the encryption key for each content is stored in a title key file (TKF). That is, the title key file for the video objects and the title key file for the stream objects are arranged, and 1998 encrypted title keys (abbreviated as E-TK) at maximum can be stored in each title key file.

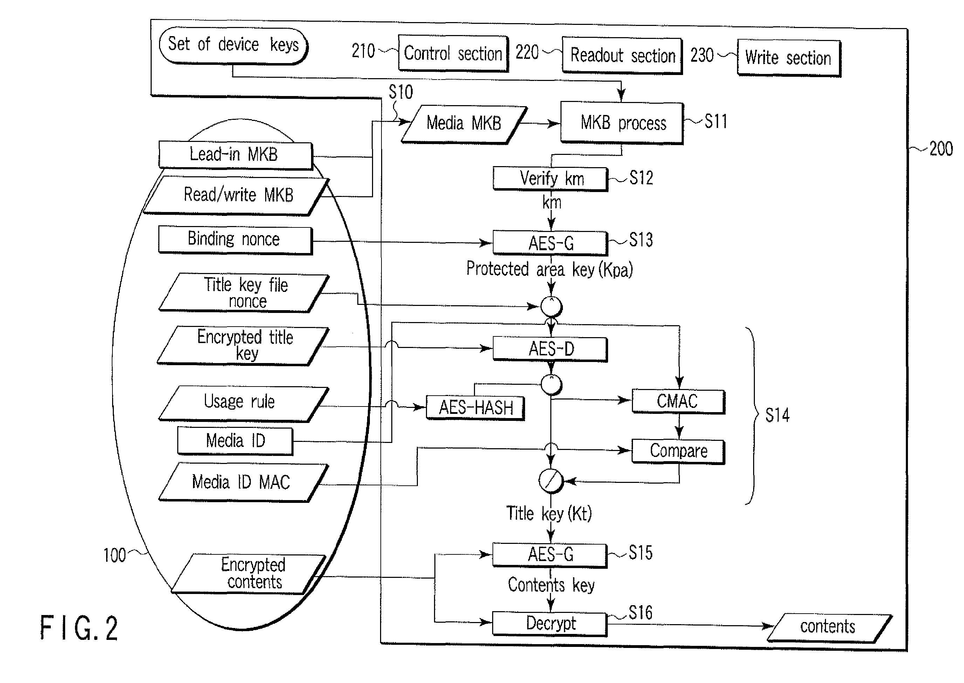

FIG. 2 is an explanatory view of processing to decrypt the encrypted contents recorded in the medium 100. FIG. 2 shows information stored in the medium 100 in which the contents and the like are recorded, a processing function disposed in an information recording and reproducing device 200 and flows of data between the information and the function.

The content protection technology employed in the HD_DVD video recording format is the AACS. The control method of the contents key in the AACS will be described with reference to FIG. 2. The data recorded in an area which cannot be overwritten in the disc for use in AACS processing include the followings:

• the media ID; and
• a lead-in MKB.

On the other hand, examples of data stored as a file in the disc 100 for use in the AACS processing include:

• a read write MKB;
• the title key file; and
• a usage rule file.

Moreover, data based on a random number referred to as binding nonce is recorded in a protected area of a top address of the title key file.

In the AACS, processing to generate a "title key (Kt)" for encrypting the contents is executed roughly in the following order. That is, MKB processing is performed using the lead-in MKB or the read write MKB of a newer version. The key generated by this processing is referred to as a "media key (Km)". When this media key Km and the binding nonce are input to perform protected area key processing (Kpa processing), a "protected area key (Kpa)" is generated. This key Kpa, data of the usage rule file and data of the title key file are input to perform the title key processing (TK processing), the encrypted title key described in the title key file can be converted into an original title key Kt.

The MKB is data referred to as the media key block, and the media key Km is encrypted and recorded in the data. In the MKB, information of an unjust device is also recorded, and the unjust device cannot take out the key Km. Since the information of the unjust device is updated, a new MKB needs to be used. Therefore, the AACS of HD_DVD includes three types of MKB, that is, the lead-in MKB buried in a lead-in area of the medium, the read write MKB stored as the file in the disc and a device MKB stored in a nonvolatile memory of the device itself. It is determined that the newest MKB of these MKBs is overwritten in the read write MKB. However, when the MKB is updated to the new MKB, a value of Km is changed. Therefore, information items of all keys (Kpa, Kt, etc.) of and after the key Km are to be reproduced or re-generated.

It is to be noted that the information recording and reproducing device 200 of FIG. 2 is provided with a control section 210, a readout section 220 and a write section 230. The control section 210 controls various functions and various processing operations of the information recording and reproducing device 200 shown in FIG. 2. The readout section 220 reads data from the medium 100 to store the data in the information recording and reproducing device 200. The write section 230 writes the data of the information recording and reproducing device 200 in the medium 100.

The lead-in media key block (MKB) is stored in a read-only lead-in area of the medium 100, and the read write MKB is stored in a user data area which is a rewritable area. The MKB is the "media key block" in which the media key (Km) as a base key for encryption of the contents is encrypted with a set of device keys (Kd) arranged as confidential keys in the information recording and reproducing device 200 to arrange a mathematical system.

In S10 of FIG. 2, a version of the lead-in MKB recorded in the medium 100 is compared with that of the read write MKB recorded in the medium to read out the MKB of the new version as a media MKB. Subsequently, in S11, the MKB processing is performed using a set of device keys and the media MKB stored in the information recording and reproducing device 200. This device key set includes a plurality of device keys Kd.

Here, information for generating the protected area key (Kpa) is encrypted and stored in the MKB, but additionally revoke information is also included. That is, when a security hole is arranged in a certain device key set and use of the corresponding device key Kd is prohibited by a licenser, the revoke information on the corresponding device key Kd is described. This revoke information prohibits the device having the corresponding device key Kd from decrypting a cryptograph (i.e., the revoked information cannot be reproduced). Since the information of the unjust device is successively updated with an elapse of time, the new MKB (the latest updated MKB) needs to be used. Therefore, the newer version is used as the media MKB as described above.

The media key (Km) is generated by this MKB processing. In S12 of FIG. 2, the generated media key is verified. In a case where, as a result of the verification, it is judged that the generated media key is unjust, it is judged that the device key set is unjust, and processing concerning the AACS is completed.

On the other hand, the "data based on the random number" combined with the file referred to as the binding nonce is recorded in the protected area of the top address of the title key file (TKF). This binding nonce cannot be copied with, for example, a write command of a personal computer (PC), and can be copied with an only command defined by the AACS. The information can be copied with only licensed hardware of the AACS. In consequence, outflow of the information via the PC is prevented.

Next, in S13 of FIG. 2, the Kpa processing which is encryption processing is performed using the key Km and the binding nonce. In this Kpa processing, an advanced encrypted standard (AES)-G is used which is an encryption algorithm. As a result of this Kpa processing, the protected area key (Kpa) is generated.

Next, title key processing for generating a title key (TK) from the key Kpa will be described. This processing is shown in S14 of FIG. 2. Random number data referred to as title key file nonce (TKFN) is stored in the title key file (TKF). This TKFN is random number data for use in encrypting the title key during the encryption processing (described later). The disc 100 includes the usage rule file in which usage rules of contents are described. In this usage rule file, information (the usage rule) indicating whether or not to apply each of a plurality of usage rules is described as bit information of 0 or 1.

Furthermore, the media ID is recorded in a read-only burst cutting area (BCA) arranged internally from the lead-in area of the disc 100. The media ID is an inherent ID added to each medium. A media ID message authentication code (MAC) which is a tampering preventive code MAC using the media ID is stored in the user data area which is the rewritable area.

During the title key processing shown in S14 of FIG. 2, the processing is performed using an algorithm of AES-D based on a result of the above processing of the usage rule, Kpa and TKFN, and the encrypted title key (E-TK) is decrypted to generate the title key (2K). It is to be noted that, in this case, the MAC generated using the media ID stored in the BCA is compared with the media ID MAC stored in the disc to verify that the tampering is not performed. In S15 of FIG. 2, the TK generated in this manner and the encrypted contents are processed with an algorithm of AES-G to generate a contents key. In S16, the encrypted contents are decrypted using this contents key to generate contents.

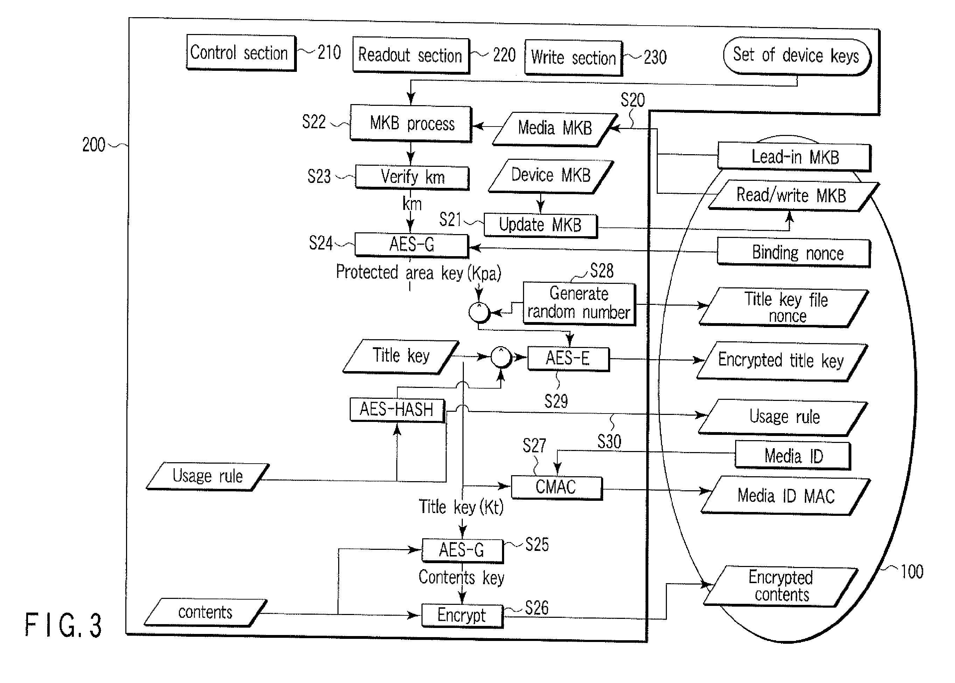

FIG. 3 is an explanatory view of processing of encrypting the contents to record the contents in an optical disc 100 such as HD_DVD-R/RW/RAM. It is to be noted that the same terms as those of FIG. 2 are used. Therefore, redundant description is omitted. In S20 of FIG. 3, the version of the lead-in MKB recorded in the medium 100 is compared with that of the read write MKB to read out the MKB of a new version as the media MKB. Next, the version of the media MKB is compared with the version of the device MKB of the information recording and reproducing device 200. When the device MKB is of a newer version, in S21, MKB update processing is started to update the value of the device MKB in the read write MKB. However, when the media MKB is of a newer version, it is judged whether or not the value of the device MKB is to be updated in accordance with set specifications. Moreover, in S22 of FIG. 3, the MKB processing is performed using the device key set and the media MKB stored in the information recording and reproducing device 200. The media key (Km) is generated by this MKB processing.

In a case where the generated media key is verified in S23 of FIG. 3 and it is judged as a result of the verification that the generated media key is unjust, it is judged that the device key set is unjust and the processing concerning the AACS is completed.

On the other hand, in S24 of FIG. 3, the Kpa processing which is the encryption processing is performed using the key Km and the binding nonce. As a result of the Kpa processing by use of AES-G, the protected area key (Kpa) is generated.

In S25 of FIG. 3, the title key (TK) and the contents are processed with the algorithm of AES-G to generate the contents key. Moreover, in S26, the contents are encrypted using this contents key to generate the encrypted contents. The contents are recorded in the medium 100. In S27, the MAC is generated using the media ID and the key TK, and stored as the media ID MAC in the medium 100. On the other hand, in S28, the random number data for use in encrypting the title key is generated, and recorded as the title key file nonce in the medium 100. Subsequently, in S29, the processing is performed using an algorithm of AES-E based on a result of hash processing (a known technology) of the usage rule and the keys Kpa and TK, and the encrypted title key (E-TK) is generated and stored in the medium 100. It is to be noted that the usage rule is recorded in the medium 100 in S30.

As described above, during the encryption and decryption of the contents, the title key and the like play significant roles. However, the title key and the like are recorded as a readable/writable file in the medium 100. Therefore, when the surface of the medium is made dirty with, for example, a fingerprint and the like, there is a possibility that the medium is easily brought into a state in which the contents cannot be read out. To solve the problem, in the AACS, the title key file (TKF) in which information such as the title key is stored is backed up.

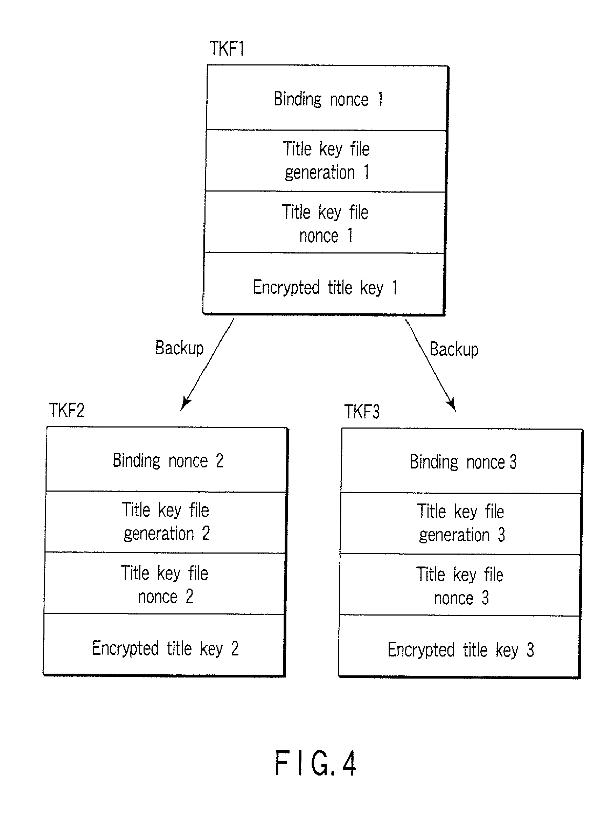

FIG. 4 is an explanatory view showing a structure example of the title key file and other title key files which are backup files of the title key file. It is to be noted that in the description of this backup method, the title key file is TKF1 and the title key files as the backup files are TKF2 and TKF3. It is to be noted that the TKF1 to TKF3 are stored in the medium 100.

In the title key files (TKF1 to 3), binding nonce 1 to 3 (BN1 to 3), title key file generations 1 to 3 (TKFG1 to 3), title key file nonce 1 to 3 (TKFN1 to 3) and encrypted title keys 1 to 3 (ETK1 to 3) are registered, respectively. Here, the binding nonce 1 to 3 (BN1 to 3) are random number data for use in encrypting the title key file of the device as described above. The title key file generations 1 to 3 (TKFG1 to 3) are times of changes of the title key files (TKFG1 to 3), respectively. The title key file nonce 1 to 3 (TKFN1 to 3) are random numbers for generating encrypted title keys (ETK1 to 3) of files other than the title key file of the device and the backup files.

The encrypted title keys 1 to 3 (ETK1, ETK2 and ETK3) are represented by the following equations (eq. 1) to (eq. 3):

$$ETK1 = f(TK, BN1, TKFN3) \dots (eq. 1);$$

$$ETK2 = f(TK, BN2, TKFN1) \dots (eq. 2);$$

and

$$ETK3 = f(TK, BN3, TKFN2) \dots (eq. 3),$$

in which TK is a title key of a plaintext that is not encrypted, and an encryption processing function f indicates that the first parameter (TK) is subjected to the encryption processing by use of a second parameter (BN1 to 3) and a third parameter (TKFN1 to 3) as encryption keys. During encryption processing f, a known encryption algorithm such as the advanced encryption standard (AES) may be used.

That is, TKF1 is associated with TKF3, and constituted by encrypting the title key (TK) with (BN1) and (TKFN3) of the associated TKF3. Moreover, TKF2 is associated with TKF1, and constituted by encrypting the title key (TK) with (BN2) and (TKFN1) of the associated TKF1. Furthermore, TKF3 is associated with TKF2, and constituted by encrypting the title key (TK) with (BN3) and (TKFN2) of the associated TKF2.

As described above, the title key file TKF1 and the backup files TKF2 and TKF3 are associated with different files. The encrypted title keys (E-TK1, E-TK2 and E-TK3) are constituted by encrypting the title keys (TK) with (BN1, BN2 and BN3) registered in the file of the device and (TKFN1, TKFN2 and TKFN3) registered in the associated other files.

As described above, three title key files are stored and the TKFN is stored in another file. In consequence, even if one TKF is broken owing to damage on the data or the like, the broken data can be recovered from two remaining TKF data.

It is to be noted that the above-described binding nonce is data which can be read and written with an only special driving command. In consequence, unjust copying can be prevented. That is, if the TKF is copied, the accompanying binding nonce of the file is not copied. Therefore, a malicious unjust encryption/decryption action by the third party can be prevented.

It is to be noted that the associating of the title key file with the TKFN of the other backup files is not limited to the above equations (eq. 1) to (eq. 3). The title key file may be associated with the TKFN of the backup files in accordance with a pattern other than the equations (eq. 1) to (eq. 3).

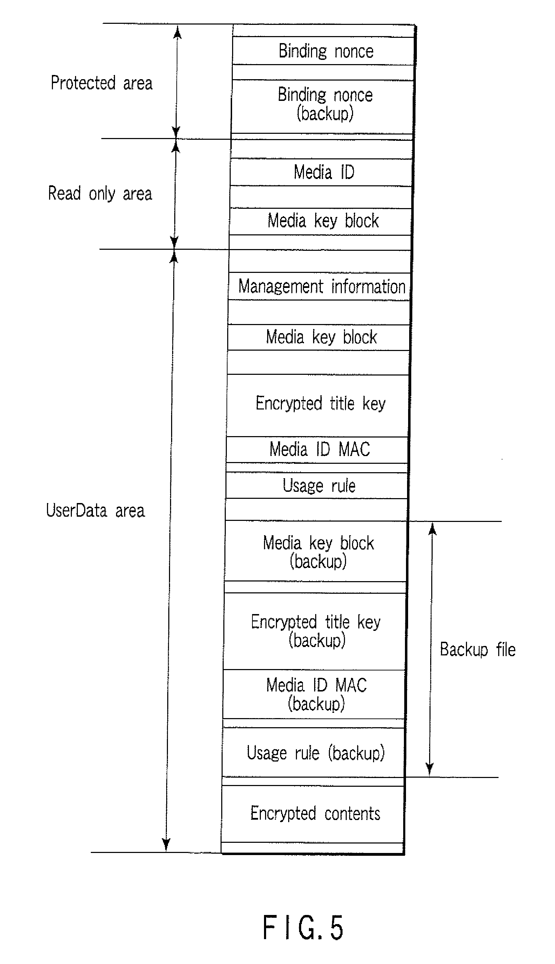

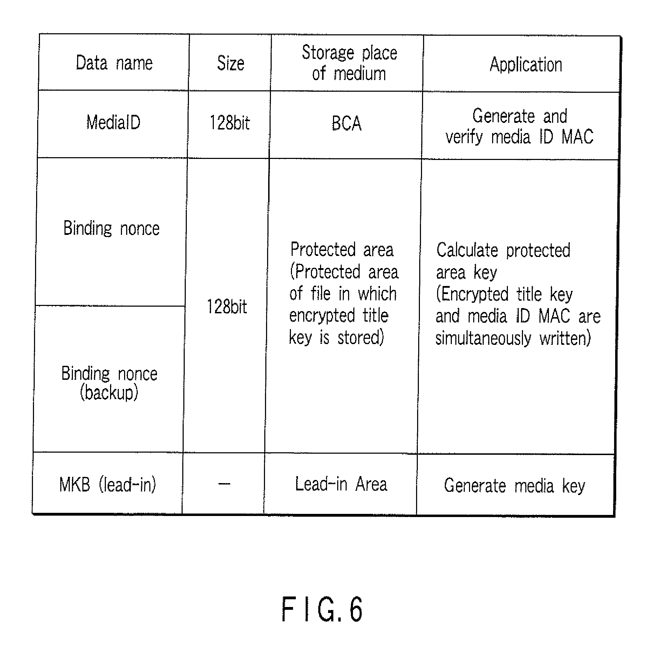

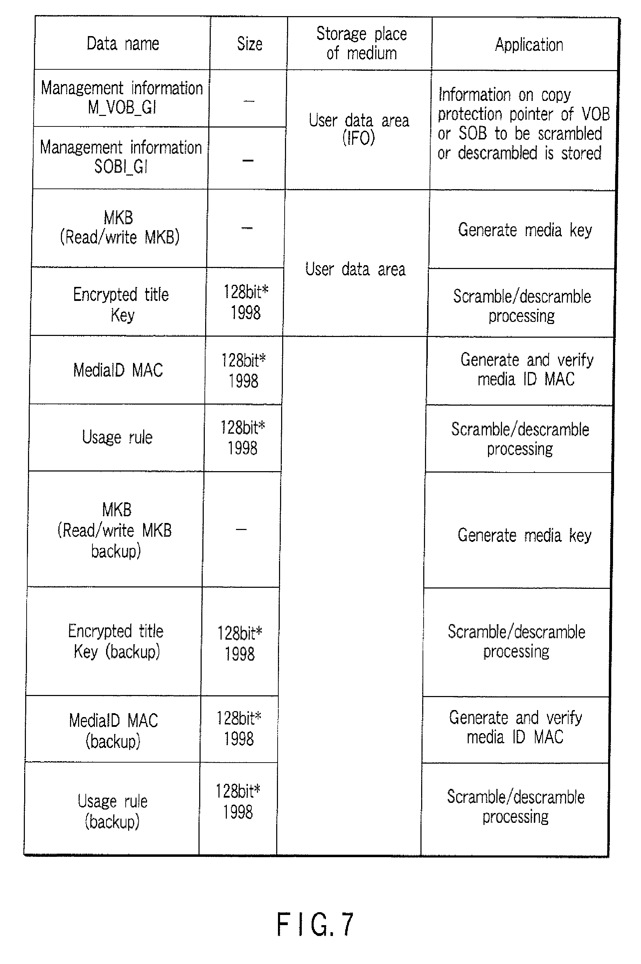

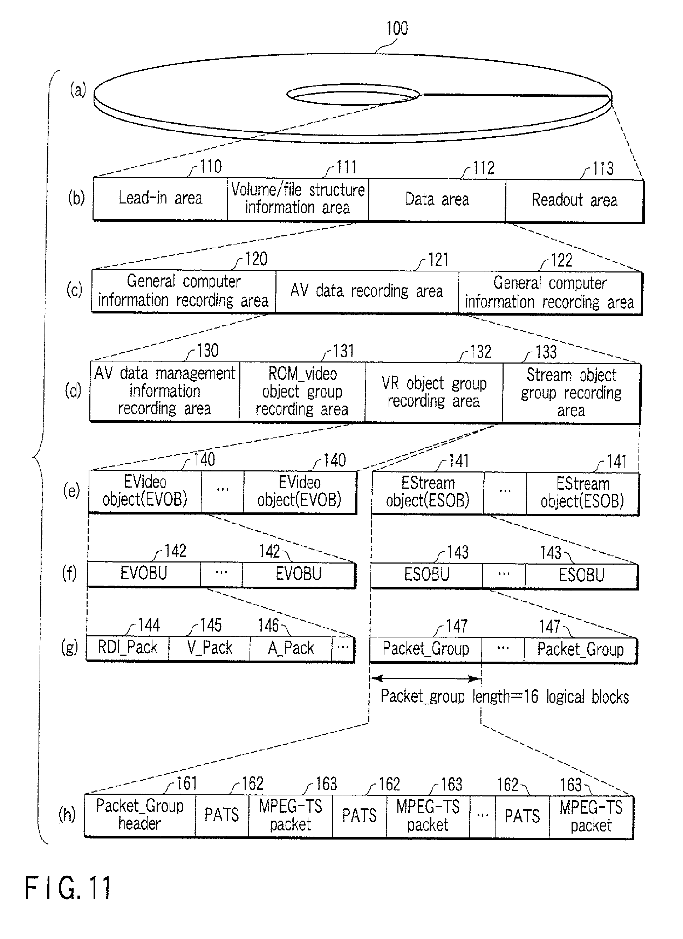

The data stored in the medium for use in the recording and reproducing of the AACS will be described in detail with reference to FIGS. 5, 6 and 7. In the protected area of the medium 100, that is, the protected area of the file in which the E-TK is stored, the binding nonce and the backup data of the key are stored. The media ID is recorded in the burst cutting area (BCA) of a read-only area of the medium 100, and the lead-in MKB is recorded in the lead-in area (110 of FIG. 11 described later).

Management information which is information on a copy protection pointer of a video object (VOB) and/or a stream object (SOB) is stored in the user data area of the medium 100. In the user data area, the read write MKB, the encrypted title key (E-TK), the media ID MAC, the usage rule and the backup files of the block, key, code and rule are stored. Furthermore, 1998 encrypted contents at maximum can be stored in the user data area.

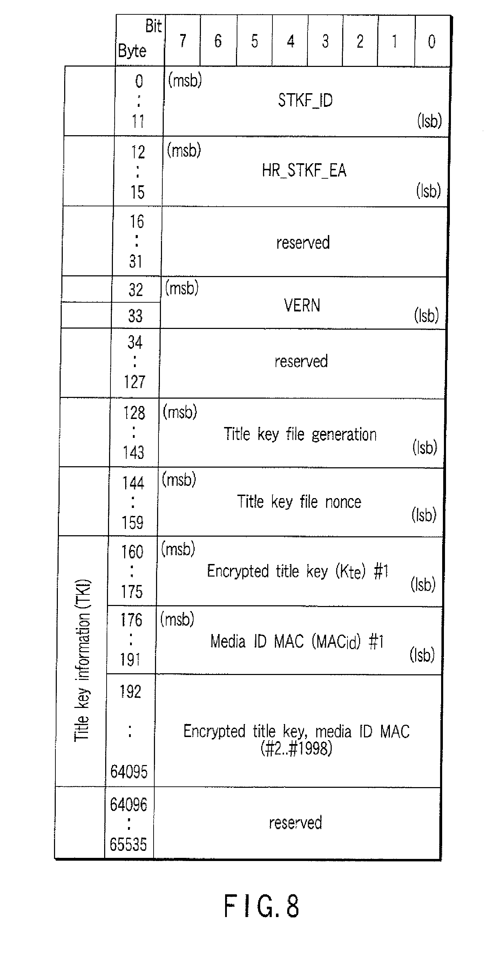

FIG. 8 shows a structure of the encrypted title key file (E-TKF). It is to be noted that FIG. 8 shows the structure of the E-TKF of the stream object (SOB), and the structure is similar to that of the file of the video object (VOB). At byte positions of 0 to 15 bytes, fixed information (STKF_ID, HR_STKF_EA) for specifying the title key file is described. At positions of 32 to 33 bytes, a version number of the AACS is described. Furthermore, at positions of 128 to 143 bytes, the title key file generations are stored, and at positions of 144 to 159 bytes, the title key file nonce is stored. In addition, at positions of 160 to 64095 bytes, 1998 sets of the encrypted title keys (E-TK) and the media ID MAC are described as title key information (KTI).

The contents are encrypted using one key of the 1998 title keys. However, the encrypted title keys do not have to be recorded in all of 1998 sets, and a numeric value of 0 encrypted by TK processing is described in a key which is not used. A value which increments every time this file is updated is described in the title key file generation. As described above, the title key file includes three files in total for the backup. Moreover, in a case where all of the values of the title key file generations of these three files do not agree with one another, it is meant that a certain trouble has occurred during the writing in the file.

Next, an update method of the title key file will be described. Examples of a type of the medium to which the AACS is applied include a rewritable medium and a write-once medium. In the rewritable medium, for example, every time a new content is additionally recorded, a new title key is added. Therefore, all of the title keys of the title key file need to be encrypted again by use of a new key Kpa. That is, the title key file needs to be updated.

In addition, the numeric value based on the random number of the binding nonce is described in the protected area of the title key file, but this binding nonce is used in preventing unjust cryptograph cancellation. Therefore, the binding nonce is also updated every time the title key file is updated.

On the other hand, in the write-once medium, every time the title key file is updated, the title key file is written in a new address. Therefore, the address where the binding nonce is written differs every time. However, in the AACS, it is demanded that the binding nonce be overwritten at the same place. Therefore, in the write-once medium, the title key file should not be updated. Therefore, the rewritable medium is different from the write-once medium in update conditions of the title key file.

In the title key file of FIG. 8, 1998 encrypted title keys are recorded. The contents are encrypted using one of the 1998 keys. The encrypted title keys do not have to be recorded in all of the 1998 keys, and the numeric value of "0" is encrypted by the TK processing and described in the key which is not used. The value which increments every time this title key file is updated is described in the title key file generation. The title key is stored in the title key file. When the file cannot be read owing to defects of the medium and the like, the.contents cannot be reproduced. Therefore, the keys are written in three files for the backup. In a case where all of the values of the title key file generations of these three files do not agree with one another, it is meant that a certain trouble has occurred during the writing in the file.

The numeric value based on the random number of the binding nonce is recorded in the protected area of the address of the medium 100 in which the title key file is written. The protected area is an area where the value can be read and written with an only special command for exclusive use in the AACS. When an element constituting the key Kpa is recorded in this portion, unjust cryptograph cancellation by use of the personal computer or the like can be prevented.

The title key of the title key file is encrypted by combining the protected area key with the binding nonce to perform the TK processing. At this time, the binding nonce of the title key file #2 is used in encrypting the title key file #1, and the binding nonce of the title key file #3 is used in encrypting the title key file #2. In consequence, even if one of three title key files is damaged, the title key file can be recovered using the two other files. The binding nonce is used in encrypting the title key in this manner. Therefore, every time the title key file is updated, the binding nonce is updated.

On the other hand, the binding nonce depends on the address in which the file is written. In a write-once medium such as HD_DVD-R, the title key file itself is stored in the new address every time. The position in which the binding nonce is written is not limited to one position. However, in the AACS, it is demanded that the binding nonce be overwritten at the same place. Therefore, in the write-once medium, the title key file is not updated.

In the title key file, 1998 title keys can be stored. It is presumed that the number of the keys agrees with each of the number of the video objects (VOB) and the number of the stream objects (SOB) and that the title key (Kt) is changed for each video object. This is because, for example, in a case where the contents are moved from the disc to another medium, if the title key being used is not deleted, a loop hole that can unjustly be copied remains. If the title key is deleted, another object that shares the same title key cannot be decrypted. Therefore, the keys which differ with the objects need to be assigned if possible. For this purpose, in the recording and reproducing device, the title key is newly generated for each recording process, and the video object and the stream object are encrypted by use of the title key.

On the other hand, especially during the recording by use of the stream object (SOB), the stream object needs to be dynamically divided in accordance with contents of digital broadcasting as a recording target. Specifically, in a case where a constituting element of the stream object (SOB) is changed, for example, the number of voice streams changes at a boundary between programs, the SOB is automatically divided at the boundary. In such a case, the title key cannot actually be switched at the boundary (if the title key is switched, much time is taken in generating the new key, and therefore during start of the recording of the divided SOB, the recording of a top portion of the SOB is missed). In such a case, the encryption by use of the same title key is successively performed.

It is to be noted that when the disc is the write-once medium (the medium which cannot be overwritten), the title key file cannot be updated. Therefore, during the processing to generate the key at the start of the recording, the title key which already exists is used.

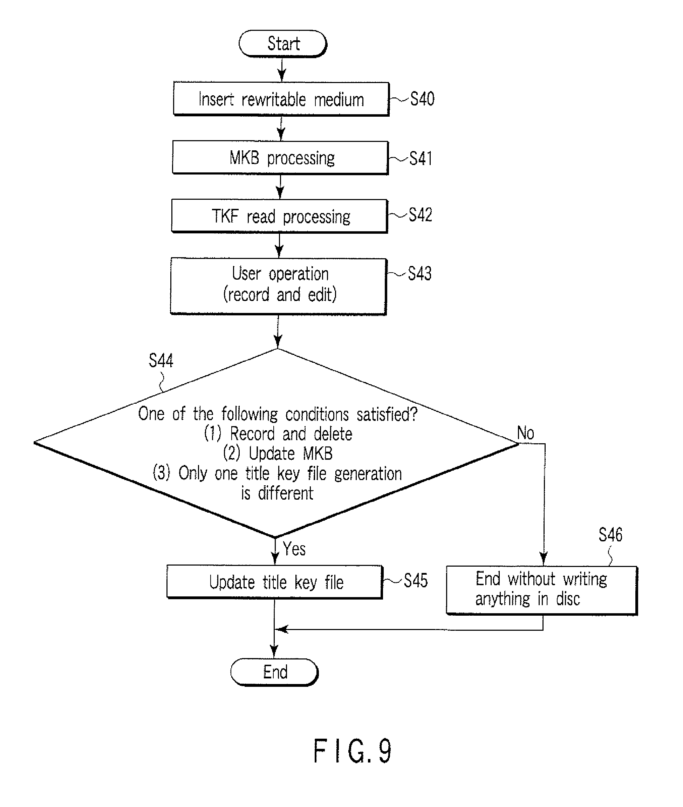

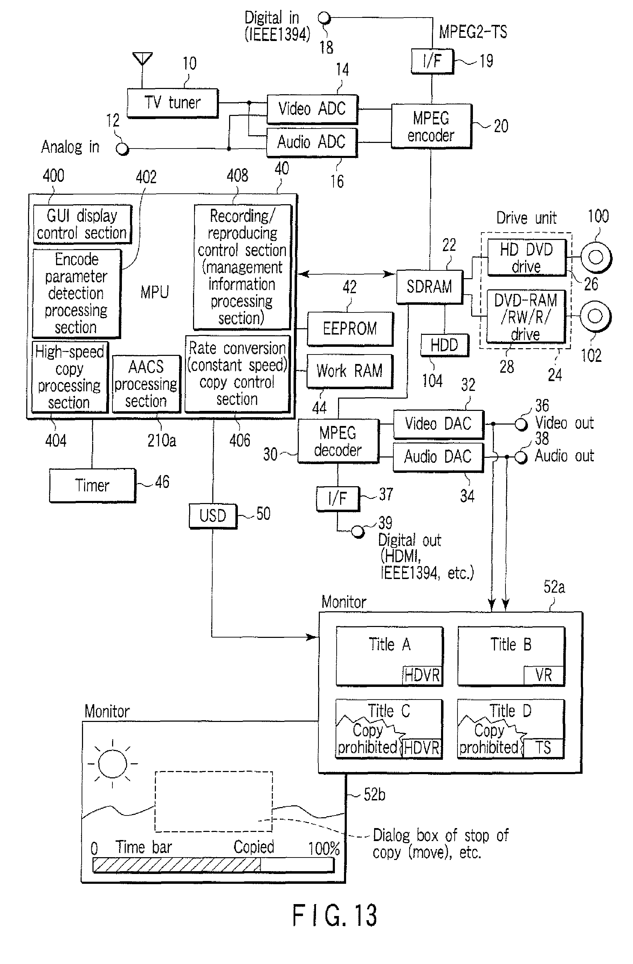

FIG. 9 is a flow chart showing an update procedure of the title key file of the rewritable medium in a case where the rewritable medium (HD_DVD-RW/RAM, HDD or the like) is used as the medium 100. Therefore, the title key file is already generated and written in the rewritable medium. It is to be noted that a processing operation shown in FIG. 9 is realized by the control section 210 of the information recording and reproducing device 200 (or firmware of an AACS processing section 210a of FIG. 13 described later).

For example, when a user turns on a power source of the information recording and reproducing device 200 to insert the rewritable medium in S40 of FIG. 9, MKB processing (S41) and TKF read processing (S42) are executed together. In the MKB processing (S41), signatures attached to the read write MKB and the lead-in MKB are verified. In a case where it is judged that a result of the verification is valid, MKB versions are acquired. The version of the read write MKB has to be the same as or newer than that of the lead-in MKB. However, if not, the reproducing and the recording are limited. In the TKF read processing (S42), the title key file arranged in the medium is developed in SDRAM (22 of FIG. 13 described later or the like).

Moreover, it is judged in S43 and S44 whether or not the title key file is to be updated in response to user's content recording operation, content editing operation, content deleting operation, medium discharging operation and turning-off operation of the power source of the information recording and reproducing device 200. That is, the title key file is updated only when at least one of the following three conditions is satisfied.

(1) A condition that the contents are recorded or deleted:

When the contents are recorded or deleted, the encrypted title key of the title key file is newly added or deleted. Therefore, the title key file is updated.

(2) A condition that the MKB is updated:

For example, when the version of the device MKB as the MKB held in the information recording and reproducing device 200 is newer than that of the read write MKB, the value of the device MKB is copied to the read write MKB to change the media key (Km) of the device MKB. Therefore, the title key file is updated to encrypt the title key again.

(3) A condition that only one of three title key file generations differs:

As described above, one of the three title key files is broken. Therefore, the damaged title key file is repaired (updated) using two remaining normal title key files. That is, when at least one of the above three conditions is established (S44Y), the title key file is updated (S45). When all of the above three conditions are not established (S44N), the processing is ended without updating the title key file (S46).

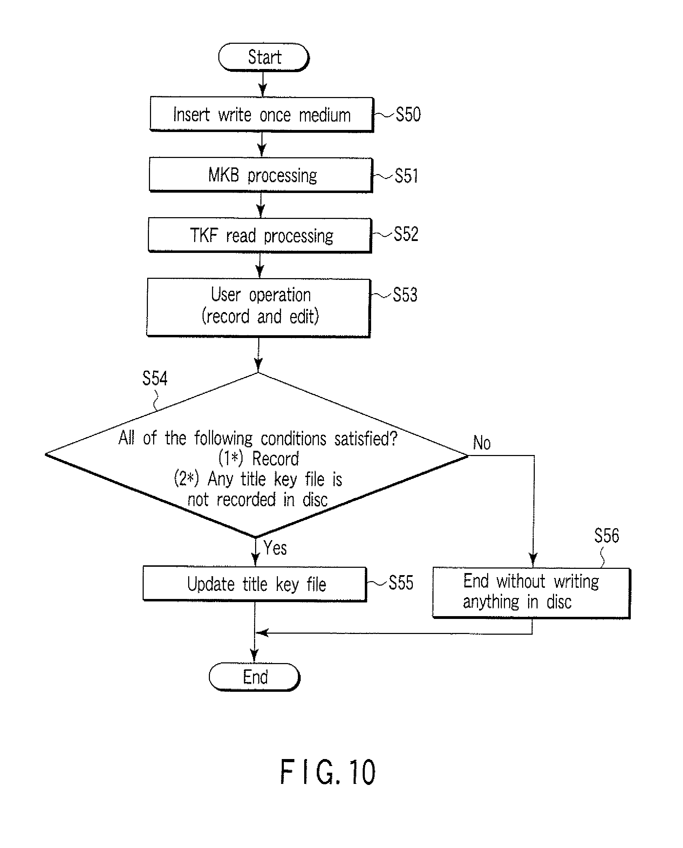

FIG. 10 is a flow chart showing a writing procedure of the title key file of the write-once medium in a case where the write-once medium (HD_DVD-R with one layer on one side thereof, HD_DVD-R:DL with two layers on one side thereof or the like) is used as the medium 100. It is to be noted that a processing operation shown in FIG. 10 can be executed by the control section 210 of the information recording and reproducing device 200 (or the AACS processing section 210a of FIG. 13) in the same manner as in FIG. 9.

For example, when the user turns on the power source of the information recording and reproducing device 200 to insert the write-once medium in S50 of FIG. 10, MKB processing (S51) and TKF read processing (S52) are executed together. In the MKB processing (S51), the signatures attached to the read write MKB and the lead-in MKB are verified. In a case where it is judged that the result of the verification is valid, the MKB versions are acquired. The version of the read write MKB has to be the same as or newer than that of the lead-in MKB. However, if not, the reproducing and the recording are limited. In the TKF read processing (S52), the title key file arranged in the medium is developed in the SDRAM (22 of FIG. 13 or the like).

Moreover, it is judged in S53 and S54 whether or not the title key file is to be written in response to the user's content recording operation, content editing operation, content deleting operation, medium discharging operation and turning-off operation of the power source of the information recording and reproducing device 200. That is, the title key file is written, when at least two conditions described below are satisfied.

(1*) A condition that the contents are recorded
(2*) A condition that any title key file is not recorded in the disc

It is demanded in the AACS that the title key file be overwritten at the same place. Therefore, when the conditions (1*) and (2*) are satisfied at the same time, the title key file is written in the write-once medium. Reasons for this will be described hereinafter.

Under the only condition (1*), every time the contents are recorded, a write request is made. This raises a problem in the write-once medium which cannot be overwritten at the same place. Under the only condition (2*), in a state in which the contents are not recorded in the disc, any valid contents key is not generated. Therefore, an only invalid encrypted title key is recorded in the title key file, and this raises a problem. In a case where both of the conditions (1*) and (2*) are satisfied, the title key file is written, when the contents are recorded in a state in which any title key file is not recorded in the disc. Therefore, the title key file is recorded in which only one valid encrypted title key is generated.

In a case where the above two conditions are both established (S54Y), the title key file is written in the disc (S55). In a case where the above two conditions are not established (S54N), the processing is ended without writing any title key file (S56).

According to the above-mentioned embodiment, each type of medium is provided with a condition on which the title key file is written. Only when the condition is satisfied, the title key file is written in the disc. According to this condition, the title key file is not uselessly updated in the rewritable medium, and the number of times when the title key file is written in the disc can be reduced. In the write-once medium, it can be prevented that the title key file with the problem is written.

FIG. 11 is an explanatory view of a data structure example according to the embodiment. Typical examples of a recordable or rewritable information storage medium include a DVD disc 100 (DVD±R, DVD±RW, DVD-RAM or the like including a single recording layer or a plurality of recording layers by use of red laser with a wavelength of around 650 nm or bluish purple or blue laser with a wavelength of 405 nm or less). As shown in FIG. 11, this disc 100 includes a volume/file structure information area 111 including a file system and a data area 112 in which a data file is actually recorded. The file system includes information indicating the file which is recorded and a place where the file is recorded.

The data area 112 includes areas 120, 122 in which information is recorded by a general computer and an area 121 in which audio video data (AV data) is recorded. The AV data recording area 121 includes an AV data management information area 130 including a video manager file (VMG or HDVR_MG) for managing the AV data; an ROM video object group recording area 131 in which a file of object data is recorded according to a DVD video (ROM video) standard; a VR object group recording area 132 in which a file (a VRO file) of object data (an extended video object set:

ESOBS) is recorded according to a video recording (VR) standard); and a recording area 133 in which a file (an SRO file) of stream object data (an extended stream object set: ESOBS) is recorded. An object for digital broadcasting is recorded in the SRO file. It is to be noted that the recording standard for the SRO file is appropriately referred to as a stream recording (SR) standard.

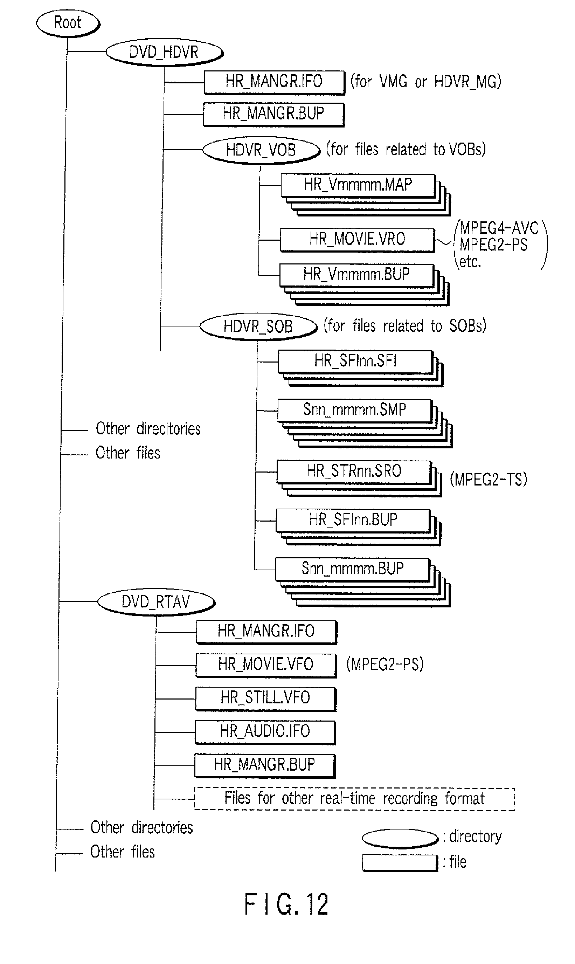

FIG. 12 is an explanatory view of a file structure example according to the embodiment. As shown in FIG. 12, a DVD_HDVR directory includes HR_MANGER.IFO which is a management information file of an HD_DVD-VR format; an HDVR_VOB directory including a VRO file which is an object file of an analog video input (an EVOB file in which the maximum allowable rate is 30.24 Mbps); an HDVR_SOB directory including the SRO file (an ESOB file) for the digital broadcasting; and the like. A DVD_RTAV directory under the same route directory as that of the DVD_HDVR directory includes VR_MANGER.IFO which is a management information file of a DVD_VR format; a VRO file (a VOB file of conventional DVD-VR with the maximum rate suppressed at 10.08 Mbps) which is an object file with an analog video input; and the like.

That is, in a file structure according to this embodiment, an HDVR MPEG2-TS data file, an HDVR MPEG2-PS data file and a VR MPEG2-PS data file are managed under the same route directory. For example, assuming that shortcut files linked to HR_MOVIE.VRO are title thumbnail A, C and that a shortcut file linked to VR_MOVIE.VRO is a title thumbnail B and that a shortcut file linked to HR STRnn.SRO is a title thumbnail D, these title thumbnails A to D can be displayed in the same menu screen (see a display example of a monitor screen 52a of FIG. 13). In consequence, the user can operate a menu of separate objects (objects in which MPEG2-PS and MPEG2-TS are mixedly arranged) in the same screen operation environment.

FIG. 13 is a block diagram showing a constitution example of a recording and reproducing device (an HD_DVD recorder) according to the embodiment. Analog AV outputs of a TV tuner 10 having a function of receiving satellite digital TV broadcasting, earth digital TV broadcasting and earth analog TV broadcasting are input into a video ADC 14 and an audio ADC 16. Analog AV inputs from an external analog input terminal 12 are also input into the video ADC 14 and the audio ADC 16. A video stream digitized by the video ADC 14 and an audio stream digitized by the audio ADC 16 are input into an MPEG encoder 20. A digital stream (MPEG2-TS or the like) from an external digital input terminal 18 is input into the MPEG encoder 20 via an interface 19 such as IEEE1394 (or HDMI). Although not shown, a digital stream (MPEG2-TS or the like) from the TV tuner 10 is also appropriately input into the MPEG encoder 20. The MPEG encoder 20 encodes the input stream in MPEG2-PS or MPEG4-AVC in a case other than a case where the input MPEG2-TS is passed through the encoder.

Here, examples of a case where the stream is encoded in MPEG2-PS include a case where the stream is encoded in MPEG2-PS based on a DVD-VR standard (the maximum rate of 10.08 Mbps; the maximum resolution of 720 x 480 or 720 x 576); a case where the stream is encoded in MPEG2-PS at a high rate based on an HD_DVD-VR standard (the maximum rate of 30.24 Mbps; the maximum resolution of 1920 x 1080); and a case where the stream is encoded in MPEG2-PS at a low rate within the HD_DVD-VR standard (the maximum rate of 10.08 Mbps; the maximum resolution of 720 x 480 or 720 x 576).

The stream data encoded by (or passed through) the MPEG encoder 20 is once buffered in a high-speed memory such as a synchronous dynamic random access memory (SDRAM) 22. In this SDRAM 22, the following stream rewrite processing 1 to 3 are appropriately performed:

1. in the audio liner PCM, a value of sub_stream_id of an audio pack is rewritten;
2. contents described in RDI-PCK are rewritten; and
3. A cryptograph of CPRM is decrypted once and encrypted again in the AACS, or this may be performed in an inverted order.

The stream data buffered and processed in the SDRAM 22 is transferred to an HDD 104, an HD_DVD drive 26 or a DVD drive 28 at a predetermined timing in accordance with contents of the data. As the HDD 104, a large-capacity hard disc drive (e.g., 1 TB) is used. A blue laser (e.g., a wavelength $\lambda$ = 405 nm) is used in the HD_DVD drive 26, and a red laser (e.g., a wavelength $\lambda$ = 650 nm) is used in the DVD drive 28.

The HD_DVD drive 26 and the DVD drive 28 constitute a drive unit 24. The drive unit 24 includes two independent drives including a rotary driving system, includes an HD_DVD/DVD convertible drive (a twin pickup type) having a common rotary driving system and individual optical heads of the blue laser and the red laser, or includes a double-wavelength optical system (a single pickup type) in which the rotary driving system and the optical head have a common mechanism and the blue laser and the red laser are switched for use.

The embodiment of FIG. 13 illustrates a case where two independent drives 26 and 28 including the rotary driving system are arranged. As information storage mediums (an optical disc 100 for the blue laser and an optical disc 102 for the red laser) for use in these drives, in addition to an optical disc of -R/-RW/RAM type, an optical disc of +R/+RW type may be used for both of the blue laser and the red laser. In future, a large-capacity optical disc using a hologram may be used.

The HD_DVD drive 26 copes with the recording and reproducing based on the HD_DVD-VR standard, and the DVD drive 28 copes with the recording and reproducing based on the DVD-VR standard. The DVD drive 28 is further configured to record and reproduce even the data encoded based on the HD DVD-VR standard by use of the disc 102 of the DVD-VR standard (DVD-R/RW/RAM with one layer on one side, DVD-R with two layers on one side, DVD-RAM with one layer on each side or the like) at a constant speed or a high speed as long as the data is of MPEG-PS having the maximum rate, video attribute and the like which fall in the DVD-VR standard. (According to a specific example, it is constituted that even the data encoded based on the HD_DVD-VR standard can be copied/dubbed in the disc 102 of the DVD-VR standard at a high speed as long as the data is MPEG2-PS data of NTSC video recorded in the HDD 104 at a maximum rate of 10.08 Mbps. Needless to say, the MPEG2-PS data encoded based on this HD_DVD-VR standard can be copied/dubbed in the disc 100 of the HD_DVD-VR standard at the high speed.)

The stream data reproduced from the HD_DVD drive 26, the DVD drive 28 and/or the HDD 104 is transferred to an MPEG decoder 30 via the SDRAM 22. The MPEG decoder 30 has a function of decoding MPEG2-TS, MPEG2-PS, MPEG4-AVC or the like (e.g., a function decoding VC-1 determined according to the HD_DVD-VR standard) in response to the transferred stream. Video data (MPEG2-TS or MPEG2-PS) decoded by the MPEG decoder 30 is converted into an analog video signal having a standard or highly definite image quality by a video DAC 32 and output from a video output terminal 36. Moreover, audio data decoded by the MPEG decoder 30 is converted into an analog audio signal by an audio DAC 34, and output from an audio output terminal 38. Furthermore, when the decoded data is MPEG2-TS, the data is appropriately output from a digital output terminal 39 to the outside via an interface 37 such as IEEE1394 (or HDMI). The AV signals (the analog video signal and the analog audio signal) decoded by the MPEG decoder 30 and D/A converted by the DACs 32, 34 are input into an external monitor.

An operation of the recording and reproducing device (an HD DVD recorder) of FIG. 13 is controlled by an MPU 40. An EEPROM 42 in which firmware and various parameters are stored, a work RAM 44, a timer 46 and the like are connected to the MPU 40. Examples of contents of the firmware of the MPU 40 include a GUI display control section 400 which provides a graphic user interface, an encode parameter detection processing section 402, a high-speed copy (high-speed dubbing) processing section 404, a rate conversion copy (constant-speed copy/constant-speed dubbing) control section 406, a recording/reproducing control section (a management information processing section) 408, the AACS processing section 210a (corresponding to the control section 210 of FIG. 2) and the like. A processing result of the GUI display control section 400 is displayed in a screen of the external monitor via an on-screen display section (OSD) 50 (the display screen 52a of the title thumbnails, a dialog box display screen 52b during copy processing and the like can be obtained by processing of the OSD 50).

In the embodiment of FIG. 13, in the HDD 104, one extremely large capacity HDD (e.g., 1 TB) may be used, or a plurality of large-capacity HDDs (e.g., 500 GB + 500 GB) may be used together. To use a recording area of the HDD, the recording area of the HDD may logically be divided into a plurality of partitions for use, or an application may be specified for each physical HDD. In the former case, for example, it is considered that a first partition of 400 GB of 1 TB is assigned to MPEG2-TS recording (for TS title) of digital highly definite broadcasting, a second partition of 400 GB is assigned to MPEG4-AVC recording (for HDVR title) of digital highly definite broadcasting, and a third partition of 200 GB is assigned to MPEG2-PS recording (for VR title) of analog broadcasting, digital broadcasting or an external input. In the latter case, for example, it is considered that a first 400 GB HDD is assigned to MPEG2-TS recording (for TS title), a second 400 GB HDD is assigned to MPEG4-AVC recording (for HDVR title), and a third 200 GB HDD is assigned to MPEG2-PS recording (for VR title).

It is to be noted that according to the embodiment, the VR title includes MPEG2-PS recording in which the maximum rate is suppressed at 10.08 Mbps according to the next-generation HD_DVD standard in addition to the MPEG2-PS recording according to the existing DVD-VR standard. At an object data level, it can be judged whether or not the stream data of the certain VR title is MPEG2-PS according to the DVD-VR standard or MPEG2-PS in which the maximum rate is suppressed at 10.08 Mbps according to the HD_DVD standard by judging whether described contents of specific information (e.g., the program maximum rate "program_max_rate") of the object data is "10.08 Mbps" or "30.24 Mbps". At a management information level, the judgment can be performed before starting reproduction of the title of the level by judging whether or not the specific information (e.g., a video attribute "V_ATR") of the management information includes a resolution (e.g., 1280 x 1080) which cannot be obtained with the existing DVD-VR standard.

In the embodiment, the above-mentioned plurality of types of titles (TS title, HDVR title and VR title) are subjected to file management under the same directory as illustrated in FIG. 12. Therefore, icons or thumbnails of the plurality of types of titles (TS title, HDVR title and VR title) can be displayed in the same screen 52a. Therefore, the user can similarly operate the plurality of titles regardless of the standards (HD_DVD-VR, DVD-VR, etc.) of the titles and situations in which the titles have been recorded (the HD_DVD-VR recording with the maximum rate of 10.08 Mbps, the DVD-VR recording with the maximum rate of 10.08 Mbps, etc.).

FIG. 14 is a flow chart showing a recording method according to the embodiment. Processing of this recording method is executed every time a certain object (VOB or SOB) is once recorded. For example, it is assumed that recordings of programs A and B of digital broadcasting protected by copyright are reserved using an electronic program guide (EPG) or the like. In this case, when the recording of the program A is reserved, the processing of FIG. 14 is executed (using a certain encryption key). For example, the video object VOB (MPEG4AVC or the like) corresponding to the program A is encrypted to record the object in an optical disc (e.g., 100 of FIG. 13) or a hard disc (e.g., 104 of FIG. 13). When the recording of the program B is reserved, the processing of FIG. 14 is executed anew (using another encryption key). For example, the stream object SOB (MPEG2TS or the like) corresponding to the program B is encrypted to record the object in the optical disc (100) or the hard disc (104) .

When one recording is started as described above, the key (the title key Kt or the contents key) for use in the encryption of the AACS is generated (ST100). This key generation processing can be performed in the same manner as in the processing described with reference to FIG. 3. It is to be noted that, when the object is recorded in a medium such as the hard disc or an overwritable medium such as HD_DVD-RW/RAM, the key is generated anew in ST100.

However, when the object is recorded in a write-once medium such as HD_DVD-R (or HD_DVD-R:DL with two layers on one side) which cannot be overwritten, the keys (the title keys) are beforehand prepared as needed in the same file (the title key file) by processing of FIG. 17 described later. Moreover, when these keys beforehand prepared are appropriately (or successively) used, the key can substantially be updated even in the write-once medium which cannot be overwritten.

These keys are sufficiently beforehand prepared so that the keys are not used up during update. However, if all of the plurality of keys beforehand prepared are used up for a certain reason, the finally updated key is the existing key (Kt) of the medium. Subsequently, the existing key (Kt) may be used (see the last parentheses of ST100).

In a case where the object as the recording target is not divided during recording of the object (ST102N), while encrypting the object by use of the key generated in ST100 (according to the AACS) (ST106), the encrypted object is recorded in the recording medium (the hard disc, the optical disc or a semiconductor memory) (ST108). While one recording of the object as the recording target is not ended (ST110N), the processing of ST102 to ST110 is repeated.

The object as the recording target is divided by, for example, recording pause, change of a video attribute or the like during the recording of the object (e.g., SOB of the program B) (ST102Y). In this case, when the subsequent recording is counted as another recording, the processing is not apparently one recording. However, the processing is regarded as an event during one recording, and the key (Kt) used in encrypting the object before divided (e.g., the SOB of the former half of the program B) is applied to the object after divided (e.g., the SOB of the latter half of the program B (ST104). In this case, new key generation processing (the processing described with reference to FIG. 3) can be omitted. Therefore, there is not any time lag due to the generation of the new key. The encryption (ST106) of the divided object and the recording (ST108) of the object can smoothly be executed (specifically, it can be prevented that a top portion of the divided object is cut during continuously recording of the object).

When one recording of the object as the recording target is ended as described above (ST100Y), various pieces of management information for reproducing the recorded object is recorded in the HR_MANGR.IFO file (see FIG. 12) (ST112), and the recording of FIG. 14 ends.

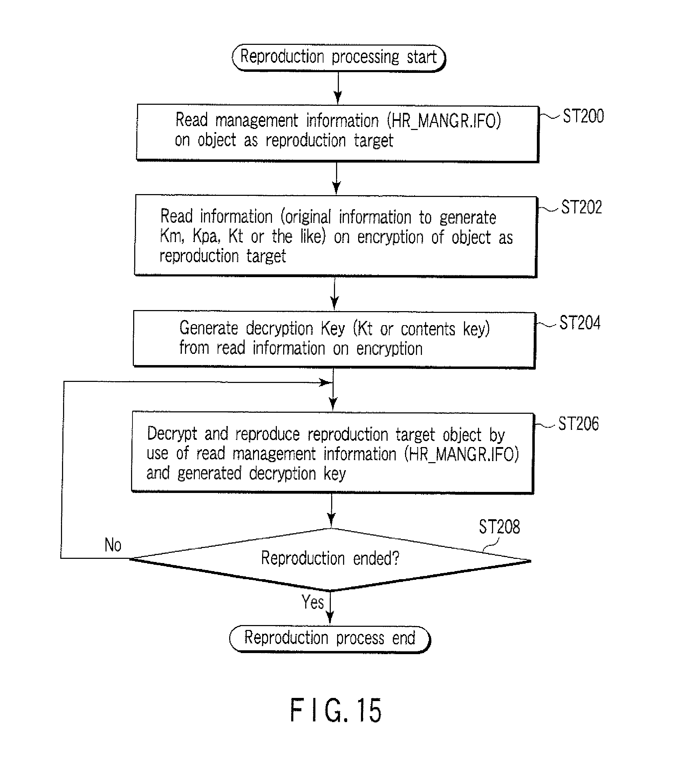

FIG. 15 is a flow chart showing a reproducing method according to the embodiment. The management information of the object (e.g., the SOB of the program B) to be reproduced is read from the disc 100 in which the object data (VOB and/or SOB) and the management information are recorded by the processing of FIG. 14 (ST200). The read management information is once stored in a working memory (44 of FIG. 13 or the like) of a reproduction device.

This reproduction device (corresponding to 200 of FIG. 2) reads information (the original information to generate Km, Kpa, Kt or the like) on the encryption of the object to be reproduced from the optical disc (e.g., 100 of FIG. 13) or the hard disc (e.g., 104 of FIG. 13) (ST202), and the device generates the decryption key (Kt or the contents key) from the read information (ST204). Here, the original information to generate Km, Kpa, Kt or the like is the lead-in MKB, the read write MKB, the binding nonce, the title key file, the usage rule file or the like (see FIG. 2). This decryption key generation processing can be performed in the same manner as in the processing described with reference to FIG. 2. The reproduction target object is decrypted and reproduced using the management information (an HR_MANGR.IFO file) read in this manner and the generated decryption key (Kt or the contents key) (ST206). When this reproduction processing ends up to a tail end of the reproduction target object (or the user or a device control program instructs stop of the reproduction) (ST208Y), the reproduction processing of FIG. 15 ends.

In addition, the numeric value based on the binding nonce as the random number is recorded in the protected area of the address of the medium 100 in which the title key file is written. The protected area is an area where the information can be read or written (accessed) with the only special command for exclusive use in the AACS. When an element constituting a protected area key (Kpa) is beforehand recorded in this portion, unjust cryptograph cancellation using the personal computer (PC) or the like can be prevented. This binding nonce needs to be updated every time the title key file is updated.

On the other hand, the binding nonce depends on an address in which the file is written. In a write-once medium such as the HD DVD-R, the title key file itself is stored at a new address every time. A position in which the binding nonce is written is not limited to one position. However, it is demanded that the binding nonce be overwritten in the same place in the AACS. In the write-once medium, the title key file cannot be updated as long as the AACS is employed.

As described above, since the title key file is not updated in the write-once medium, the number of the title keys for first preparing the title key file are beforehand prepared in a case where the medium is first used during the recording. However, 1988 title keys at maximum do not have to be prepared, and the only minimum number of the title keys may be prepared. The minimum number of the title keys may be one, if one key is common to all the contents. However, in this case, a plurality of individual contents (e.g., a plurality of individual digital broadcast programs) managed by the AACS cannot be recorded in one write-once medium.

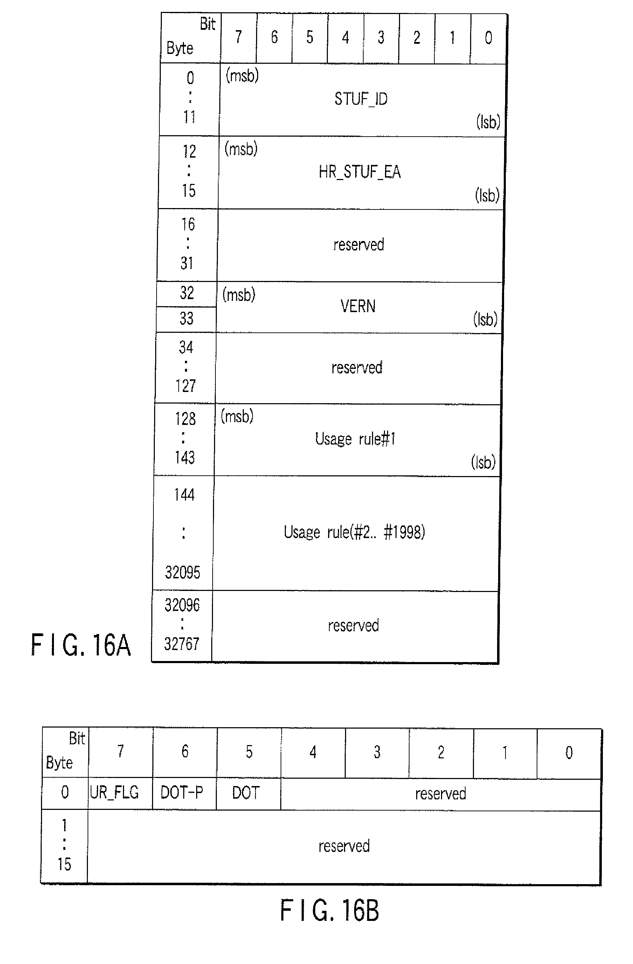

According to the AACS, usage limitations and the like are described for each content in a title usage rule file. Examples of this title usage rule file are shown in FIGS. 16A, 16B. As shown in FIG. 16A, usage rule #1 to usage rule #1998 are prepared as 1998 columns in which rules of usage limitations are described, and the rules are associated with title key numbers. That is, the usage rule of the title key #1 corresponds to the usage rule #1.

FIG. 16B shows a data structure of the usage rule, and UR_FLG is a bit indicating whether this rule is valid or invalid. When the rule is invalid, 0 is described in the bit of UR_FLG. The subsequent DOT-P and DOT are a main body of the rule (the usage rule or the usage limitation). For example, when a digital only token (DOT) is 1, the rule indicates that the contents should not be an analog output. As described above, the rule is associated with the title key. Therefore, when an employed rule during the encryption of the contents differs, the title key should differ. Therefore, two title keys including the title key to which the rule is applied and the title key to which any rule is not applied are used in accordance with the number of types of the usage rules. At the present, two rules DOT and DOT-P are defined by the AACS. Therefore, in an actual operation, four types of title keys need to be beforehand prepared at minimum.

Moreover, in addition to the keys for the encryption of the content, a key is used for encryption of an advanced resource file of an interoperable content. A common key may be used in all resource files. Therefore, the number of the keys for the encryption of the advanced resource file of the interoperable contents is one at minimum. (It is to be noted that the "interoperable content" corresponds to a content(s) which can be reproduced by a player conforming to the HD_DVD-video standard of a reproduction system among the contents recorded according to the HD_DVD-video recording standard of the recording and reproducing system.)

Therefore, to first prepare the title key file in the write-once medium 100, content title keys as many as the title usage rule files plus one, and one title key for the advanced resource file are prepared beforehand. In this case, even if the title key file is a write-once medium that cannot be updated, the AACS can be operated.

FIG. 17 is a flow chart showing one example of a processing procedure in first writing the title key file in the write-once medium. The file (the title key file) of the key (the title key or the Kt) for the encryption of the contents (the title) to be protected from an unjust access by the AACS is first prepared, for example, when the processing enters FIG. 17 from the start of FIG. 14 (or during the processing of ST100 of FIG. 14). In this case, the title keys (or the Kts) corresponding to the number (the number of combinations of the usage rules, e.g., four) of the rules (e.g., two rules of DOT and DOT-P of FIG. 16B) of the usage rule file are prepared (ST300 to ST302). Moreover, when there is an advanced resource file (the ARF) protected by the copyright, or such an ARF would be prepared in future (there is a possibility that the ARF will be prepared in future) (ST304Y), the title key (or the Kt) for the ARF is separately prepared (ST306). In this manner, the number (the number of the combinations of the usage rules and appropriately the number of the title keys for the ARF) of the title keys (or the Kts) are prepared. (ST300 to ST306). The number of the prepared title keys (or the Kts) are written in the title key file (ST308).

Subsequently, the processing returns to the processing of FIG. 14 to encrypt the contents (the title) (ST106) by use of the title key (or the Kt) written in the title key file (ST100), and the encrypted contents (title) are recorded in the write-once medium (HD_DVD-R or the like) (ST108 to ST112).

It is to be noted that specific examples of resource information to be protected separately from the advanced resource file (ARF), that is, the contents (the title) include a font, an effective sound, and a static image other than the thumbnail cut out of the recorded object. Especially, a beautiful font for use in a highly definite screen (e.g., each title character displayed in the monitor screen 52a of FIG. 13 and a font for use in description of the displayed program) highly needs to be protected by the copyright, the font can be a target of the encryption and the decryption by the AACS.

The processing of FIG. 17 is briefly arranged as follows. First, the number of the rules to be written in the usage rule file is first obtained (ST300), and the title keys corresponding to the rules are generated (ST302). When the cryptograph of the advanced resource file is needed (ST304Y), one title key is further generated (ST306). The title keys generated in this step are encrypted by TK processing and written in the title key file (ST308).

<Summary>

1. To first prepare the title key file in the write-once medium, the title keys corresponding to the rules of the usage rule file are beforehand prepared as the title keys for the contents.

2. To first prepare the title key file in the write-once medium, one or more title keys for the advanced resource file (if any) are beforehand prepared in addition to the title keys for the contents.

3. This is a combination of 1 and 2. To first prepare the title key file, both of the title keys corresponding to the usage rules as the title keys for the contents and the title keys for the advanced resource file are prepared.

<Effect of Embodiment>

To first prepare the title key file in the write-once medium, the title keys as many as the usage rule files plus one title key for the content, and one title key for the advanced resource file are prepared beforehand. In this case, even if the title key file is the write-once medium which cannot be updated, the AACS can be operated without any problem (it is demanded in the AACS that the binding nonce be overwritten at the same place).

**Claims**

1. A recording method **characterized by** comprising:

    preparing (ST300-ST306) keys as many as the number of rules in a predetermined usage rule file, in a case where a file of the keys is first prepared to encrypt contents to be protected from an unjust access by a predetermined encryption system;
    writing (ST308) the prepared keys in the file of the keys;
    encrypting (ST106) the contents by use of the keys written in the file of the keys; and
    recording (ST108-ST112) the encrypted contents in a write-once medium.

2. The method according to claim 1, **characterized in that** in a case where there is a resource file in which resource information to be protected separately from the contents is stored or in a case where there is a possibility that the resource file is prepared in future (ST304Y), one or more keys for this resource file are beforehand prepared in the file of the keys (ST306 prior to ST106).

3. A reproducing method configured to use the write-once medium described in claim 1, said method **characterized by** comprising:

    reading (ST202) information on encryption from the write-once medium;
    generating (ST204) a decryption key corresponding to the key from the read information on the encryption; and
    decrypting and reproducing (ST206) the encrypted contents and/or the resource information from the write-once medium by use of the generated decryption key.

4. A recording apparatus configured to use the write-once medium described in claim 1, said device **characterized by** comprising:

    a preparer (210 or 210a) configured to prepare keys as many as the number of rules in a predetermined usage rule file, in a case where a file of the keys is first prepared to encrypt contents to be protected from an unjust access by a predetermined encryption system;
    a writer (210 or 210a) configured to write the prepared keys in the file of the keys;
    an encrypter (210 or 210a) configured to encrypt the contents by use of the keys written in the file of the keys; and
    a recorder (230 or 408, 20-24) configured to record the encrypted contents in the write-once medium.

5. A reproducing apparatus which reproduces, from the write-once medium described in claim 1, contents encrypted in accordance with a predetermined encryption system by use of a predetermined key, said device **characterized by** comprising:

    a first reader (408, 22-24) configured to read management information of the contents from the write-once medium;
    a second reader (210a, 22-24) configured to read information on the encryption from the write-once medium to generate a decryption key; and
    a decrypter (210a, 408, 22-30) configured to decrypt and reproduce the encrypted contents by use of the management information read from the write-once medium and the generated decryption key.

6. A write-once medium (100) including an area **characterized in that** a file of keys prepared as many as the number of rules in a predetermined usage rule file is pre-stored for its use by a predetermined encryption system (AACS).

7. The write-once medium according to claim 6, which employs, as the predetermined encryption system, a system where each of a plurality of keys is encrypted in accordance with a device key given to each device that justly records and reproduces contents and a randomly generated random number to register the key together with the random number in the key file, the registered key file is recorded as the prepared key file in a recording medium, and it is demanded that information on encryption be overwritten at the same place of the recording medium.

FIG.1

EP 1 868 194 A2

Set of device keys  210 — Control section  220 — Readout section  230 — Write section

~200

S10

Lead-in MKB

Read/write MKB

Media MKB → MKB process — S11

Verify km — S12

km

Binding nonce → AES-G — S13

Protected area key (Kpa)

Title key file nonce

Encrypted title key → AES-D

Usage rule → AES-HASH → CMAC  } S14

Media ID

Media ID MAC → Compare

Title key (Kt)

100 —

Encrypted contents → AES-G — S15

Contents key

→ Decrypt — S16 → contents

F I G. 2

FIG. 3

EP 1 868 194 A2

TKF1

| Binding nonce 1 |
|---|
| Title key file generation 1 |
| Title key file nonce 1 |
| Encrypted title key 1 |

Backup                              Backup

TKF2

| Binding nonce 2 |
|---|
| Title key file generation 2 |
| Title key file nonce 2 |
| Encrypted title key 2 |

TKF3

| Binding nonce 3 |
|---|
| Title key file generation 3 |
| Title key file nonce 3 |
| Encrypted title key 3 |

# F I G. 4

| | |
|---|---|
| Protected area | Binding nonce |
| | Binding nonce (backup) |
| Read only area | Media ID |
| | Media key block |
| UserData area | Management information |
| | Media key block |
| | Encrypted title key |
| | Media ID MAC |
| | Usage rule |
| | Media key block (backup) |
| | Encrypted title key (backup) |
| | Media ID MAC (backup) |
| | Usage rule (backup) |
| | Encrypted contents |

Backup file

FIG. 5

| Data name | Size | Storage place of medium | Application |
|---|---|---|---|
| MedialD | 128bit | BCA | Generate and verify media ID MAC |
| Binding nonce | 128bit | Protected area (Protected area of file in which encrypted title key is stored) | Calculate protected area key (Encrypted title key and media ID MAC are simultaneously written) |
| Binding nonce (backup) | | | |
| MKB (lead-in) | – | Lead-in Area | Generate media key |

FIG. 6

| Data name | Size | Storage place of medium | Application |
|---|---|---|---|
| Management information M_VOB_GI | – | User data area (IFO) | Information on copy protection pointer of VOB or SOB to be scrambled or descrambled is stored |
| Management information SOBI_GI | – | | |
| MKB (Read/write MKB) | – | User data area | Generate media key |
| Encrypted title Key | 128bit* 1998 | | Scramble/descramble processing |
| MedialD MAC | 128bit* 1998 | | Generate and verify media ID MAC |
| Usage rule | 128bit* 1998 | | Scramble/descramble processing |
| MKB (Read/write MKB backup) | – | | Generate media key |
| Encrypted title Key (backup) | 128bit* 1998 | | Scramble/descramble processing |
| MedialD MAC (backup) | 128bit* 1998 | | Generate and verify media ID MAC |
| Usage rule (backup) | 128bit* 1998 | | Scramble/descramble processing |

# FIG.7

| Bit Byte | 7 | 6 | 5 | 4 | 3 | 2 | 1 | 0 |
|---|---|---|---|---|---|---|---|---|
| 0 : 11 | (msb) STKF_ID (lsb) | | | | | | | |
| 12 : 15 | (msb) HR_STKF_EA (lsb) | | | | | | | |
| 16 : 31 | reserved | | | | | | | |
| 32 33 | (msb) VERN (lsb) | | | | | | | |
| 34 : 127 | reserved | | | | | | | |
| 128 : 143 | (msb) Title key file generation (lsb) | | | | | | | |
| 144 : 159 | (msb) Title key file nonce (lsb) | | | | | | | |
| 160 : 175 | (msb) Encrypted title key (Kte) #1 (lsb) | | | | | | | |
| 176 : 191 | (msb) Media ID MAC (MACid) #1 (lsb) | | | | | | | |
| 192 : 64095 | Encrypted title key, media ID MAC (#2..#1998) | | | | | | | |
| 64096 : 65535 | reserved | | | | | | | |

Title key information (TKI): rows 160–64095

FIG. 8

```
                    ┌─────────────┐
                    │    Start    │
                    └──────┬──────┘
                           │
           ┌───────────────────────────────┐
           │   Insert rewritable medium    │─── S40
           └───────────────┬───────────────┘
                           │
           ┌───────────────────────────────┐
           │        MKB processing         │─── S41
           └───────────────┬───────────────┘
                           │
           ┌───────────────────────────────┐
           │      TKF read processing      │─── S42
           └───────────────┬───────────────┘
                           │
           ┌───────────────────────────────┐
           │        User operation         │─── S43
           │       (record and edit)       │
           └───────────────┬───────────────┘
                           │
 S44                       ▼
           ◇─────────────────────────────────────◇
          /  One of the following conditions       \
         /             satisfied?                    \      No
        <      (1) Record and delete                  >─────────┐
         \     (2) Update MKB                         /         │
          \  (3) Only one title key file generation  /          │
           \           is different                 /           │
            ◇──────────────┬──────────────────────◇             │
                           │ Yes                          S46    │
           ┌───────────────────────────────┐   ┌───────────────▼───────┐
           │     Update title key file     │   │   End without writing  │
           │                               │─S45│     anything in disc   │
           └───────────────┬───────────────┘   └───────────┬───────────┘
                           │◄─────────────────────────────────┘
                    ┌──────▼──────┐
                    │     End     │
                    └─────────────┘
```

FIG. 9

FIG.10

100

(a)

(b)

| Lead-in area | Volume/file structure information area | Data area | Readout area |
|---|---|---|---|

110　　　　　111　　　　　112　　　　　113

(c)

| General computer information recording area | AV data recording area | General computer information recording area |
|---|---|---|

120　　　　　121　　　　　122

(d)

| AV data management information recording area | ROM_video object group recording area | VR object group recording area | Stream object group recording area |
|---|---|---|---|

130　　　　　131　　　　　132　　133

(e)

| EVideo object(EVOB) | ... | EVideo object(EVOB) | | EStream object(ESOB) | ... | EStream object(ESOB) |
|---|---|---|---|---|---|---|

140　　　　　140　　　　　141　　　　　141

(f)

| EVOBU | ... | EVOBU | | ESOBU | ... | ESOBU |
|---|---|---|---|---|---|---|

142　　　　　142　　　　　143　　　　　143

(g)

| RDI_Pack | V_Pack | A_Pack | ... | | Packet_Group | ... | Packet_Group |
|---|---|---|---|---|---|---|---|

144　　145　　146　　　　　147　　　　　147

Packet_group length=16 logical blocks

(h)

| Packet_Group header | PATS | MPEG-TS packet | PATS | MPEG-TS packet | ... | PATS | MPEG-TS packet |
|---|---|---|---|---|---|---|---|

161　　162　　163　　162　　163　　162　　163

F I G. 11

Root
DVD_HDVR
HR_MANGR.IFO (for VMG or HDVR_MG)
HR_MANGR.BUP
HDVR_VOB (for files related to VOBs)
HR_Vmmmm.MAP
HR_MOVIE.VRO ～ ( MPEG4-AVC / MPEG2-PS / etc. )
HR_Vmmmm.BUP
HDVR_SOB (for files related to SOBs)
HR_SFInn.SFI
Snn_mmmm.SMP
HR_STRnn.SRO (MPEG2-TS)
HR_SFInn.BUP
Snn_mmmm.BUP

Other direcitories
Other files

DVD_RTAV
HR_MANGR.IFO
HR_MOVIE.VFO (MPEG2-PS)
HR_STILL.VFO
HR_AUDIO.IFO
HR_MANGR.BUP
Files for other real-time recording format

Other directories
Other files

⬭ : directory
▭ : file

F I G. 12

F I G. 13

Start of one recording

Generate key (Kt or contents key) for use in encryption
(use existing Kt when object is recorded in HD_DVD-R) ~ST100

ST102

Object (VOB or SOB)
as recording target divided?

No

Yes

Apply the same key as key (Kt) used in object before
divided to object after divided ~ST104

Encrypt object with generated or applied key (Kt) ~S106

Record encrypted object ~S108

ST110

One recording of object as
recording target ended?

No

Yes

Record management information (HR_MANGR. IFO)
on recorded object ~ST112

End of one recording

F I G. 14

Reproduction processing start

Read management information (HR_MANGR.IFO) on object as reproduction target ~ST200

Read information (original information to generate Km, Kpa, Kt or the like) on encryption of object as reproduction target ~ST202

Generate decryption Key (Kt or contents key) from read information on encryption ~ST204

Decrypt and reproduce reproduction target object by use of read management information (HR_MANGR.IFO) and generated decryption key ~ST206

No ST208
Reproduction ended?

Yes
Reproduction process end

F I G. 15

| Bit<br>Byte | 7 | 6 | 5 | 4 | 3 | 2 | 1 | 0 |
|---|---|---|---|---|---|---|---|---|
| 0<br>:<br>11 | (msb)<br>STUF_ID<br>(lsb) | | | | | | | |
| 12<br>:<br>15 | (msb)<br>HR_STUF_EA<br>(lsb) | | | | | | | |
| 16<br>:<br>31 | reserved | | | | | | | |
| 32<br>33 | (msb)<br>VERN<br>(lsb) | | | | | | | |
| 34<br>:<br>127 | reserved | | | | | | | |
| 128<br>:<br>143 | (msb)<br>Usage rule#1<br>(lsb) | | | | | | | |
| 144<br>:<br>32095 | Usage rule(#2.. #1998) | | | | | | | |
| 32096<br>:<br>32767 | reserved | | | | | | | |

F I G. 16A

| Bit<br>Byte | 7 | 6 | 5 | 4 | 3 | 2 | 1 | 0 |
|---|---|---|---|---|---|---|---|---|
| 0 | UR_FLG | DOT-P | DOT | reserved | | | | |
| 1<br>:<br>15 | reserved | | | | | | | |

F I G. 16B

Enter

Acquire number of usage rules — ST300

Generate title keys for combinations of usage rules — ST302

ST304

No ◄ Cryptograph of advanced resource file (ARF) needed?

Yes

Generate title key for ARF — ST306

Write title key file — ST308

Return

F I G. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005039480 A